# FASCICULE DE BREVET EUROPEEN

(11) **EP 0 785 415 B1**
(45) Date de publication et mention de la délivrance du brevet: **24.05.2000**
(21) Numéro de dépôt: 97100302.5
(22) Date de dépôt: 10.01.1997
(51) Int. Cl.: G01D 5/20

(54) **Capteur inductif de déplacement**
Induktiver Weggeber
Inductive displacement sensor

(30) Priorité: 24.01.1996 CH 17996
(43) Date de publication de la demande: 23.07.1997
(73) Titulaire: Meyer, Hans Ulrich, CH-1110 Morges (CH)
(72) Inventeur: Meyer, Hans Ulrich, CH-1110 Morges (CH)
(74) Mandataire: ARDIN & CIE S.A.

(56) Documents cités:
- EP-A- 0 557 608
- DE-A- 3 014 137
- GB-A- 2 065 897
- US-A- 5 109 193

## Description

La présente invention a pour objet un capteur inductif de déplacement comportant deux éléments mobiles l'un par rapport à l'autre le long d'un chemin pourvus d'enroulements disposés le long de ce chemin et dont les inductances varient périodiquement en fonction du déplacement relatif des deux éléments, et des moyens électroniques pour déterminer la valeur dudit déplacement par la mesure des inductances des enroulements, les enroulements étant agencés sur un premier des deux éléments, le second élément présentant des caractéristiques électromagnétiques spatialement périodiques de période spatiale T le long de ce chemin susceptibles de modifier les inductances des en-roulements, lesdits moyens électroniques étant reliés aux enroulements agencés sur le premier élément pour produire un courant électrique dans une partie au moins desdits en-roulements et pour mesurer les effets produits par la position des caractéristiques électromagnétiques spatialement périodiques du second élément.

Le resolver et la synchro sont des réalisations connues de tels capteurs rotatifs. Ils comportent un élément rotatif, ou rotor, avec un enroulement primaire et un élément fixe, ou stator, avec deux ou trois enroulements secondaires dont les couplages à l'enroulement du rotor varient sinusoïdalement en fonction du déplacement angulaire du rotor. Des moyens électroniques, par exemple un convertisseur synchro-digital, déterminent le déplacement angulaire du rotor à partir de l'amplitude et de la phase des signaux couplés dans les enroulements du stator par un signal périodique de référence sur l'enroulement primaire. La précision de tels capteurs peut atteindre quelques minutes d'arc.

Une autre réalisation d'un capteur linéaire ou rotatif fonctionnant sur le même principe est l'Inductosyn de Farrand Controls Inc., Valhalla, N.Y., dont les surfaces en regard des deux éléments, écartés de 0,25mm, comportent des enroulements constitués de conducteurs plans formant des méandres en épingle à cheveux d'un pas de 2mm. La précision réalisable est de l'ordre du micromètre pour la version linéaire, ou de la seconde d'arc pour les versions rotatives.

Ces capteurs sont utilisés en particulier dans l'avionique et la machine-outil, à cause de leur robustesse, de leur insensibilité aux contaminants telles que l'eau et l'huile. Mais les fréquences des signaux de mesure sont basses, de 400Hz à 10kHz, pour limiter les distortions. Le faible rendement dû à ces basses fréquences et, surtout dans le cas de l'Inductosyn, aux faibles inductances des en-roulements implique une consommation de courant élevée; de plus, les interconnections électriques souples ou les collecteurs nécessaires entre deux éléments relativement mo-biles rendent le capteur plus encombrant et plus cher. Ces défauts limitent leur domaine d'application. Ils ne peu-vent par exemple pas remplacer les capteurs capacitifs, dans les pieds à coulisse et autres petits instruments fonctionnant sur piles pour les rendre insensibles à l'eau.

On connaît du document US 4.417.208 un appareil de mesure de distances et de vitesses comportant les caractéristiques du préambule de la revendication 1. Cet appareil comprend soit un seul enroulement, soit une suite d'enroulements connectés tous en série. Un courant électrique est produit dans cet enroulement ou dans cette suite d'enroulements et on mesure l'effet produit par des zones rapprochées prévues sur le second élément comportant une structure dentée. Dans cet appareil connu le même enroulement ou la même série d'enroulements sert donc à la fois d'élément inducteur et d'élément de mesure. Lorsqu'une zone rapprochée se trouve en face d'un enroulement, l'amplitude des oscillations électriques dans l'enroulement ou la série d'enroulements diminue. Dans cet appareil connu, on mesure donc des variations d'amplitude sur un même enroulement. Les variations d'inductance propres à celles de la distance entre les premier et second éléments jouent également un grand rôle et peuvent fausser considérablement les résultats de mesure. Une interpolation précise est donc difficile, voire impossible à obtenir. Enfin, un changement de direction de déplacement ne peut être détecté lorsque l'amplitude du signal unique est minimale ou maximale, d'où une mesure erronée de la position.

La présente invention a pour but de remédier à ces inconvénients et elle est caractérisée, à cet effet, par le fait que lesdits moyens électroniques sont agencés de façon à produire un courant électrique dans une première partie des enroulements au moins temporairement inducteurs et à mesurer les signaux induits dans une seconde partie des enroulements au moins temporairement induits.

Ces caractéristiques permettent d'obtenir un appareil fonctionnant selon un autre principe de mesure qui permet des mesures de distance d'une grande précision, la possibilité d'une interpolation fiable et l'avantage de réduire, voire d'éliminer la contribution des inductances propres, bien supérieures aux mutuelles, dans la mesure.

Avantageusement, le premier élément comprend des en-roulements ou groupes d'enroulements de configuration spatialement périodique, de période spatiale 2T le long du chemin. L'influence du second élément sur ces enroulements se faisant ainsi sur une zone de plusieurs périodes spatiales T est donc renforcée, et les erreurs dues aux variations locales de cette influence diminuées.

Favorablement, la seconde partie des enroulements est disposée en quadrature par rapport à la première partie des enroulements, c'est-à-dire décalés de T/2 pour une période spatiale des enroulements de 2T, éliminant ainsi l'inductance mutuelle directe au profit de celle due à la présence du second élément.

Une disposition très avantageuse est caractérisée par le fait que le premier élément comprend N enroulements entrelacés sur la même surface et décalés les uns par rapport aux autres d'une distance correspondant à un nombre entier de la quantité T/N le long dudit chemin. On obtient ainsi un premier élément très petit, un couplage optimal et surtout une moindre sensibilité aux imperfections géométriques. Notamment les variations de l'écart des surfaces des deux éléments, dues à des erreurs d'alignement, de guidage et de forme, restent faibles sur de petites distances et perturbent donc peu un ensemble de méandres entrelacés, ceci d'autant moins que les effets locaux sont moyennés sur toute l'étendue des méandres.

Dans une variante favorable, les enroulements sont constitués chacun par deux méandres aller-retour partiellement superposés dont les connexions aux moyens électroniques sont agencées sur un même côté du premier élément, les deux méandres étant reliés l'un à l'autre sur le côté opposé du premier élément. Cette construction permet des connexions électriques très courtes, minimisant les inductances parasites et le rayonnement, tout en quadruplant les inductances pour une surface donnée.

De façon avantageuse, les enroulements peuvent progressivement être rétrécis des deux côtés du premier élément. Ceci permet d'égaliser les inductances mutuelles et de réduire la sensibilité d'un capteur linéaire de longueur finie aux défauts d'alignement.

Avantageusement, le couplage inductif entre enroulements du premier élément peut être réalisé par l'intermédiaire de courants induits ou courants de Foucault (Wirbelstrôme, eddy currents) dans le second élément; celui-ci comporte à cet effet une configuration conductrice spatialement périodique, de période spatiale T le long de cet axe. Plusieurs exécutions sont possibles: par exemple une série de spires fermées ou de plages conductrices sur un substrat isolant, ou encore une pièce conductrice en forme d'échelle ou de bande perforée ou avec un relief périodique. On obtient ainsi des échelles facilement réalisables dans un grand choix de matériaux.

Favorablement, lesdits moyens électroniques sont agencés de façon à mesurer des couplages inductifs entre au moins deux enroulements ou groupes d'enroulements d'inductance L et de résistance R en appliquant une impulsion de tension plus courte que la constante de temps L/R aux bornes d'au moins un des enroulements ou groupes d'enroulements et en mesurant l'impulsion de tension induite aux bornes d'au moins un autre des enroulements ou groupes d'enroulements. Ceci permet des signaux de mesure de très courte durée pouvant être très espacés pour obtenir une faible consommation moyenne de courant. De plus, ces impulsions courtes résultent en un bon rendement du capteur, les pertes résistives restant faibles.

Un mode d'exécution préféré comporte trois enroulements en méandre connectés en étoile, décalés les uns des autres d'une distance correspondant à un nombre entier de la quantité T/3 le long dudit chemin, les moyens électroniques étant agencés pour appliquer une impulsion de tension aux bornes de l'un des enroulements et pour combiner les impulsions induites dans les deux autres enroulements de manière à obtenir un signal échantillonné équivalent à celui d'un enroulement fictif intermédiaire décalé d'une distance de T/2 par rapport à l'enroulement inducteur correspondant à une position en quadrature.

Favorablement, les moyens électroniques sont agencés de façon à décaler de manière périodique les enroulements inducteurs et induits dans le temps pour obtenir 6 échantillons par période spatiale T formant un signal périodique dont la composante fondamentale obtenue au moyen d'un filtre possède une phase qui varie proportionnellement au déplacement à raison d'un tour complet par période spatiale T.

Ainsi, quatre interconnections entre les méandres et les moyens électroniques de mesure sont donc suffisantes. Les trois méandres, même réalisés sur un circuit imprimé, résultent en une période spatiale T en-dessous du millimètre, qui permet une précision de mesure élevée avec des moyens électroniques simples. Un tel capteur est donc simple, robuste, précis et peut être aisément miniaturisé. Sa faible consommation de courant permet son emploi dans de petits instruments alimentés par piles qui doivent être insensibles à l'eau et autres contaminants, comme par exemple les pieds à coulisse.

D'autres avantages ressortent des caractéristiques exprimées dans les revendications dépendantes et de la description exposant ci-après l'invention plus en détail à l'aide de dessins qui représentent schématiquement et à titre d'exemple un mode d'exécution et des variantes.

La figure 1 montre en exemple les deux éléments relativement mobiles d'un capteur conforme à l'invention, le premier élément comportant quatre enroulements en forme de méandres plans et le second élément étant une bande conductrice avec des fenêtres.

La figure 2 illustre les signaux induits entre deux méandres en fonction du déplacement d'un second élément ou échelle.

La figure 3 montre partiellement les deux éléments d un capteur conforme à l'invention dont le premier élément comporte trois enroulements entrelacés.

La figure 4 montre, en variante, une autre configuration possible de trois enroulements entrelacés.

Les figures 5A à 5E illustrent quelques exemples et variantes de seconds éléments conformes à l'invention.

La figure 6 représente schématiquement des moyens électroniques d'un capteur conforme à l'invention comportant trois enroulements connectés en étoile.

La figure 7 montre une séquence de six configurations de signaux de couplage sur ces trois méandres.

La figure 8 illustre les formes d'ondes des signaux logiques et analogiques des moyens électroniques montrés à la figure 6.

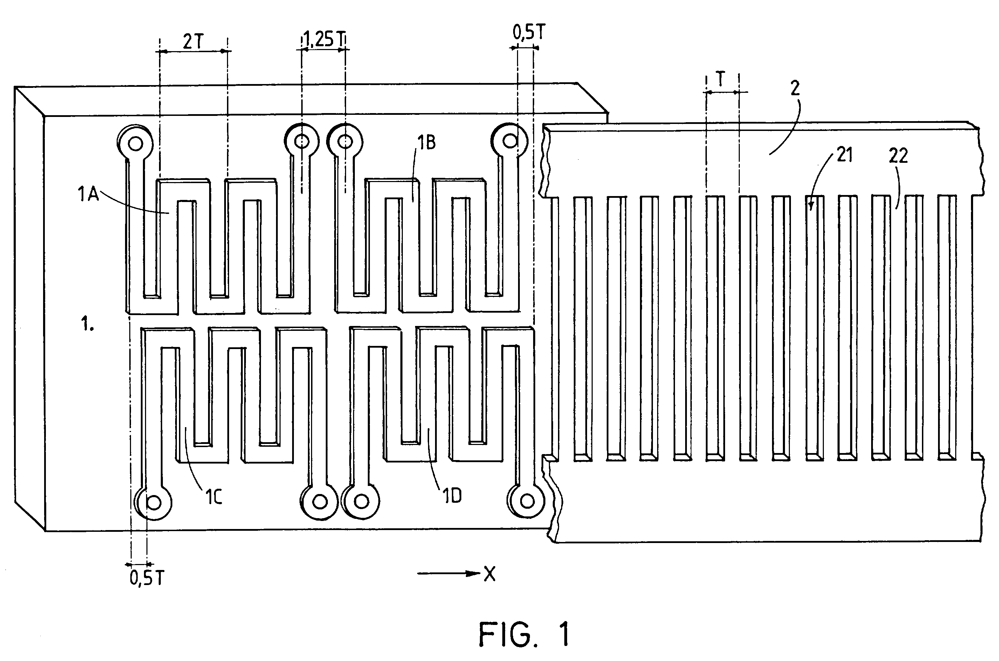

Les deux éléments mobiles l'un par rapport à l'autre selon un chemin ou un axe X d'un capteur conforme à l'invention sont représentés à la figure 1. Le premier élément 1 formant par exemple un curseur comporte quatre enroulements conducteurs 1A à 1D en forme de méandres en épingles à cheveux sur la surface en regard du second élément 2, dont seulement la portion de droite est visible pour ne pas cacher le premier élément 1. Le second élément 2, formant par exemple une règle ou échelle de mesure, est une bande conductrice pourvue d'une rangée de fenêtres 21 le long de l'axe X, et constitue ainsi l'échelle de mesure. La période spatiale, ou pas, de ces fenêtres 21 est définie comme T. Les méandres 1A à 1D de l'élément 1 ont un pas de 2T le long de l'axe X et peuvent donc induire ou détecter des champs électromagnétiques de même période spatiale 2T. Le couplage entre méandres inducteurs et induits est affecté de manière spatialement périodique par l'échelle de mesure 2, les fenêtres 21 formant avec les conducteurs avoisinants autant de boucles servant d'intermédiaires entre méandres inducteurs et induits du premier élément 1. Le sens de rotation des courants induits par les méandres alterne de fenêtre en fenêtre, de sorte que ces courants se renforcent mutuellement dans les montants 22 entre les fenêtres 21. Le champ électromagnétique reste donc confiné près des méandres, permettant des fréquences de mesure élevées pour un délai de mesure court, par exemple si le capteur fait partie d'une boucle de réglage, ou des impulsions de mesure très courtes, suffisament espacées pour une basse consommation moyenne de courant, si le capteur fait partie d'un instrument de mesure alimenté par piles.

Les couplages sont mesurés de préférence entre méandres mutuellement en quadrature, donc décalés du quart de leur pas selon X, soit de T/2, ceci pour minimiser leur couplage direct. Dans la figure 1, il s'agit des paires de méandres 1A,1C et 1B,1D, chaque paire étant bien entendu disposée de façon à se trouver en regard des mêmes fenêtres 21 de l'échelle 2 pour permettre le couplage par l'intermédiaire de celles-ci.

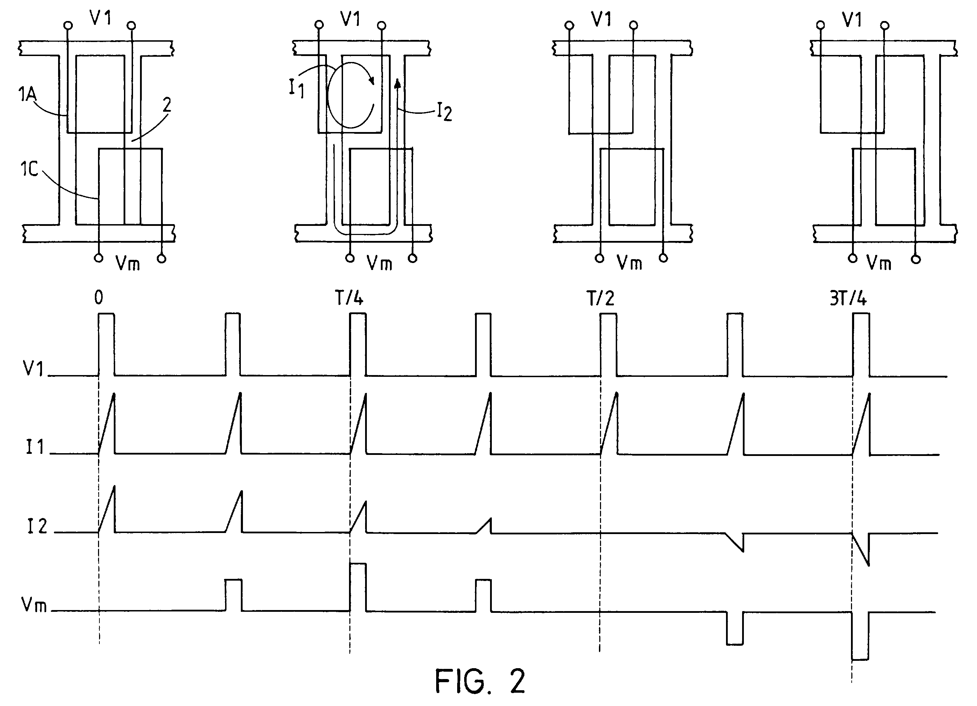

Le couplage d'un méandre à l'autre pour un déplacement imaginaire à vitesse constante de l'échelle est très schématiquement représenté à la figure 2 pour quatre positions instantanées successivement décalées de T/4, avec les formes d'onde des signaux inducteurs et induits durant ce déplacement. La tension de commande V1, consistant à titre d'exemple en une série d'impulsions rectangulaires, est appliquée aux bornes du méandre 1A, donnant lieu par son inductance propre à une série d'impulsions de courant I1 en forme de rampe dans le méandre 1A. Ces impulsions I1 induisent des courants I2 autour des fenêtres 21 de l'échelle 2 en regard des méandres 1A, 1B, et ces courants I2 induisant à leur tour des impulsions de tension Vm aux bornes des méandres 1C,1D. Pour la configuration initiale 0 (zéro), à gauche de la figure 2, les courants I2 dans l'échelle 2 sont d'amplitude maximum, le couplage ou induction mutuelle entre le méandre 1A et l'échelle étant maximal; la tension Vm aux bornes du méandre 1C par contre est nulle puisque ce méandre se trouve en quadrature avec l'échelle. L'échelle déplacée de T/4 affaiblit le couplage entre le méandre 1A et l'échelle, mais le renforce entre celle-ci et le méandre 1C; le produit de ces couplages est ici maximum, donc aussi la tension Vm aux bornes de 1C. Pour un déplacement de T/2 le méandre 1A est en quadrature avec l'échelle, résultant en une tension Vm nulle. Enfin, pour un déplacement de 3T/4, la tension Vm est de nouveau maximum, mais de sens opposé à la tension V1, le sens relatif des enroulements couplés par l'intermédiaire de l'échelle ayant changé. Pour plus de clarté, des impulsions intermédiaires sont également montrées dans la figure 2. On voit que la tension Vm varie périodiquement avec le déplacement, la période spatiale étant T.

Les tensions Vm obtenues des deux paires 1A,1C et 1B,1D de méandres en quadrature mutuellement décalés de 1.25 T dans la figure 1, sont donc des fonctions périodiques le long de l'axe X, de période spatiale T, et décalées de T/4, ce qui permet de mesurer sans ambivalence la grandeur et le sens du déplacement selon l'axe X.

Il convient de remarquer ici qu'on peut aussi mesurer l'effet du couplage de l'échelle directement dans le méandre inducteur, puisque l'inductance propre d'un enroulement est aussi influencée par la proximité du second élément; mais pour les degrés de couplage envisagés dans de tels capteurs, la variation relative d'inductance propre due à l'échelle est faible, de l'ordre de 10%, donc de faibles variations de cette inductance provenant par exemple de défauts géométriques ou des interconnections peuvent fortement influencer la mesure, puisque dans ce cas ces effets ne peuvent être distingués.

L'arrangement des méandres 1A à 1D de la figure 1 a l'avantage d'être réalisable en une couche de métal. Par contre il n'est pas compact et les variantes d'exécution du second élément, ou échelle 2 sont restreintes du fait qu'elles doivent assurer le couplage local entre au moins deux méandres séparés. Le degré de couplage est de plus réduit, chaque méandre ne couvrant que la moitié du contour d'une fenêtre. Enfin le couplage est impossible entre méandres répartis le long de X, par exemple 1A et 1B dans la figure 1.

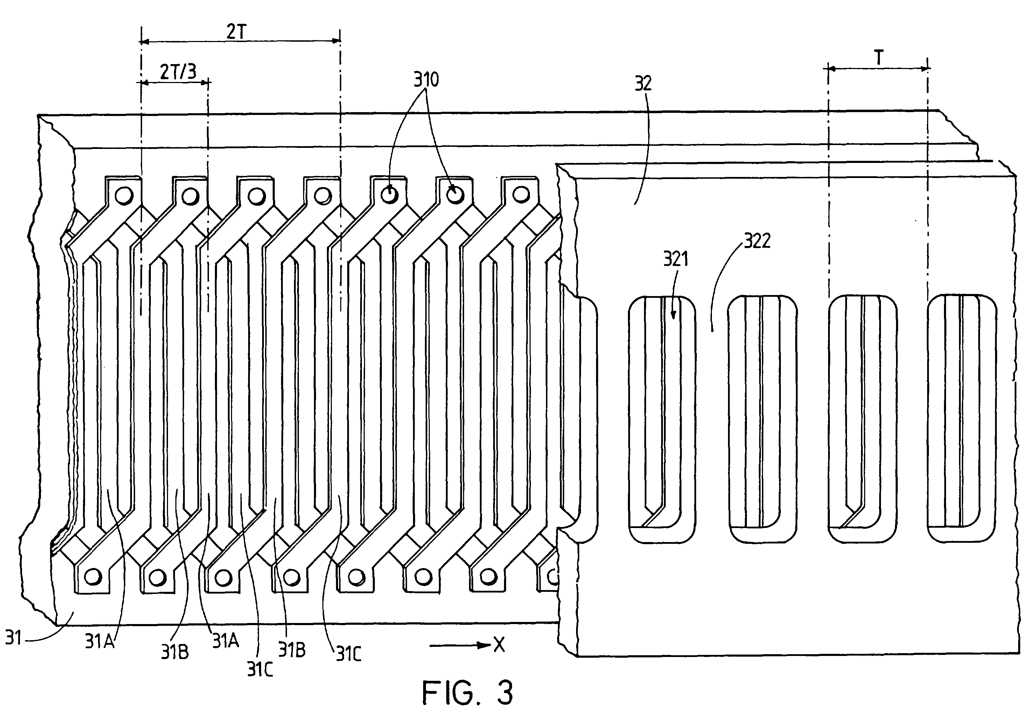

Il est donc extrêmement avantageux d'avoir, dans un capteur conforme à l'invention, des enroulements formés de méandres entrelacés, montrés à titre d'exemple à la figure 3. On élimine ainsi tous les inconvénients précités avec une couche conductrice supplémentaire, dont le coût peut même être compensé par la réduction de la surface du substrat. Plusieurs configurations d'un nombre N arbitraire de méandres entrelacés sont ainsi possibles.

A la figure 3, un premier élément ou curseur 31 avec N=3 méandres entrelacés 31A, 31B, 31C, d'un pas de 2T et successivement décalés de 2T/3, est en regard d'un second élément ou échelle 32, ici une bande conductrice avec une rangée de fenêtres 321 et de montants 322 d'un pas T. On voit que les méandres 31A, 31B, 31C sur le premier élément 31 sont réalisés sur deux niveaux de métallisation afin de pouvoir se croiser. Le passage, ou contact galvanique, d'un niveau à l'autre de chaque méandre se fait aux contacts 310. Ailleurs, les conducteurs sont isolés par une faible couche, invisible sur la figure 3, ce qui serait le cas pour une réalisation en films minces ou circuit intégré; mais cette couche peut très bien être plus épaisse, par exemple une couche isolante d'un circuit imprimé multicouches, ou le circuit imprimé même, le substrat du premier élément 31 étant dans ce dernier cas entre les deux couches conductrices, contrairement à la figure 3 où celles-ci sont du même côté du substrat.

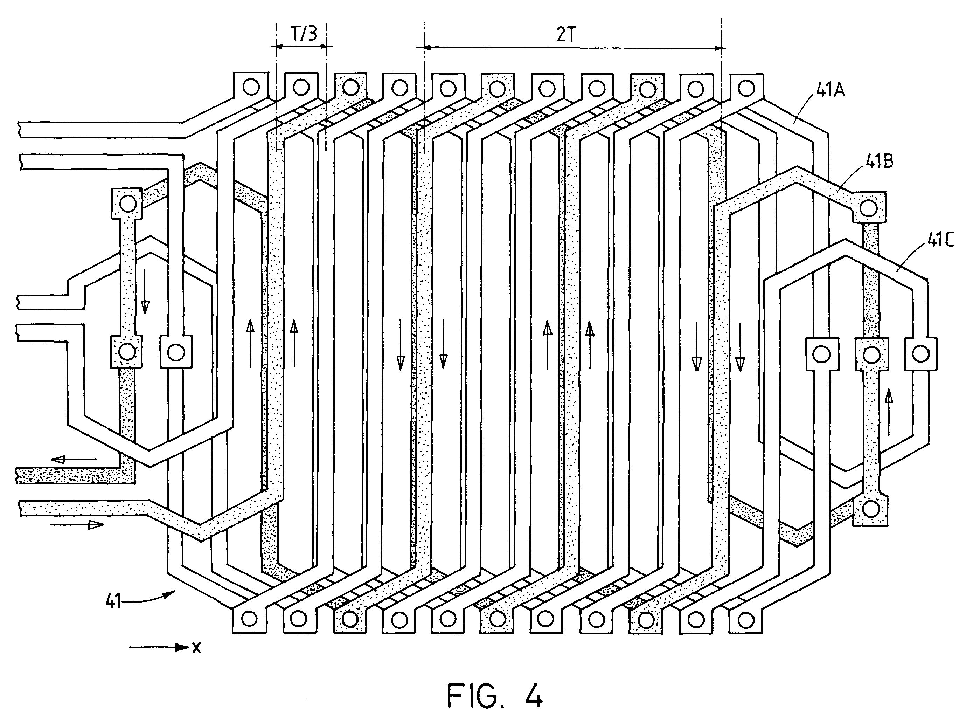

Comme leurs contacts ou trous métallisés 310 ont un pas de 2T/3, les méandres 31A, 31B, 31C de la figure 3 sont facilement réalisables sur un circuit imprimé pour des pas T de l'ordre du millimètre. Mais, si le pas entre ces contacts peut être réduit à T/3, comme à la figure 4, on peut réaliser des enroulements plus compacts. A la figure 4, chacun des enroulements 41A, 41B, 41C du premier élément 41 est constitué de deux méandres aller-retour en série dont les tronçons rectilignes en travers de x sont superposés, quadruplant ainsi leur inductance pour une même surface. On voit en effet que les tronçons rectilignes de l'enroulement 41B, dont les méandres aller-retour sont mis en évidence dans la figure 4, sont parcourus dans le même sens, indiqué par des flèches, par des courants inducteurs ou induits. Du fait de cette configuration aller-retour des enroulements, les connexions sont du même côté et peuvent donc être très courtes, minimisant les inductances parasites et le rayonnement. Les méandres des enroulements de la figure 4 sont progressivement rétrécis aux bouts, afin d'égaliser les inductances mutuelles et de réduire la sensibilité de cette configuration de longueur finie aux défauts d'alignement d'un tel capteur linéaire. Dans une version rotative il suffira par exemple de répartir l'enroulement sur tout le périmètre.

Selon l'application, on préférera une de ces solutions ou encore une autre configuration. Ces enroulements entrelacés prennent moins de place, sont moins sensibles aux erreurs de forme, et fonctionnent avec une grande variété d'échelles qui peuvent être conductrices comme dans les exemples ci-dessus ou magnétiquement perméables, la modulation des champs de couplage se faisant alors par la proximité des montants 322 de l'échelle 32.

L'échelle peut être homogène comme dans la figure 1 ou déposée sur un substrat. Au lieu de propriétés géométriques telles que les fenêtres 21 de la figure 1, son influence sur les champs électromagnétiques peut résulter de variations locales de conductivité, par exemple en dopant un semiconducteur, ou de perméabilité, par exemple par une bande magnétisée. Néanmoins, les échelles conductrices métalliques sont spécialement avantageuses par leurs qualités, à savoir résistance à l'abrasion, aux contaminants et à la température, dilatation faible, stabilité, rigidité. Les échelles comportant des conducteurs sur des substrats isolants sont également intéressantes, puisqu'elles peuvent consister en un circuit imprimé, bon marché, ou un circuit constitué par une couche mince conductrice sur un substrat céramique léger mais très précis, très stable et d'un faible coefficient de dilatation.

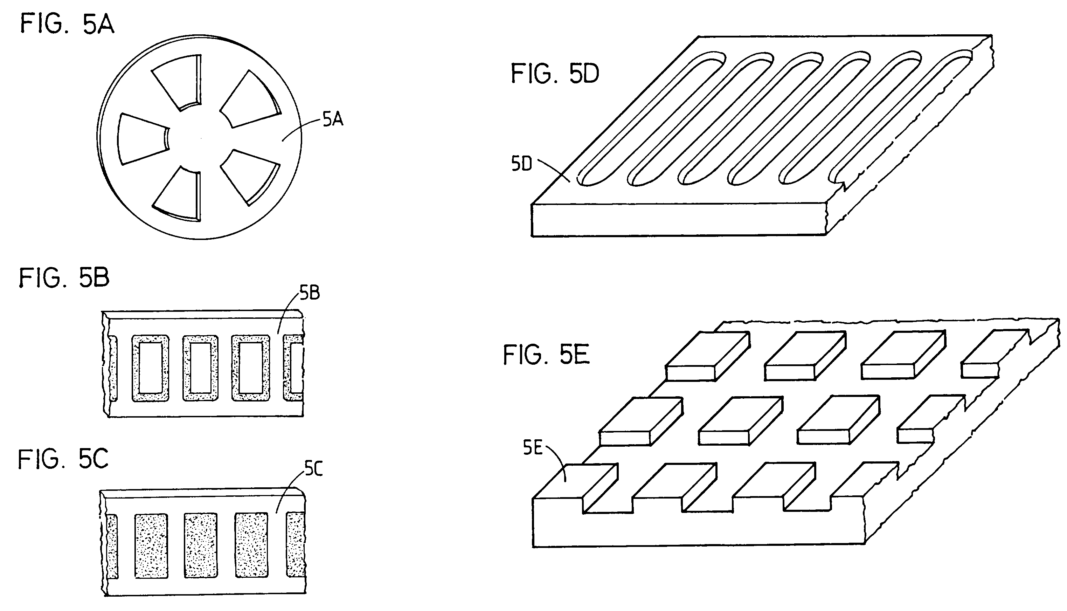

Quelques exemples de seconds éléments ou échelles conformes à l'invention sont montrés aux figures 5A à 5E. L'échelle 5A est en forme de disque conducteur muni de fenêtres radiales pour un capteur rotatif. L'échelle 5B comporte des boucles conductrices sur un substrat isolant. Ces deux échelles peuvent être lues par des enroulements entrelacés ou non. L'échelle 5C comporte des ilôts conducteurs dans lesquels sont induits des courants de Foucault. L'échelle conductrice 5D est en relief, agissant par les courants de Foucault sous la surface la plus proche du premier élément. Pour être efficace, une hauteur du relief de 0.2 T est suffisante. L'échelle conductrice ou magnétiquement perméable 5E comporte un relief en deux dimensions, permettant la lecture des deux coordonnées par deux premiers éléments disposés selon deux axes orthogonaux. Ces échelles 5C à 5E doivent être lues par des enroulements entrelacés. D'autres échelles conformes à l'invention sont possibles, le choix de l'échelle optimale dépendant de l'application.

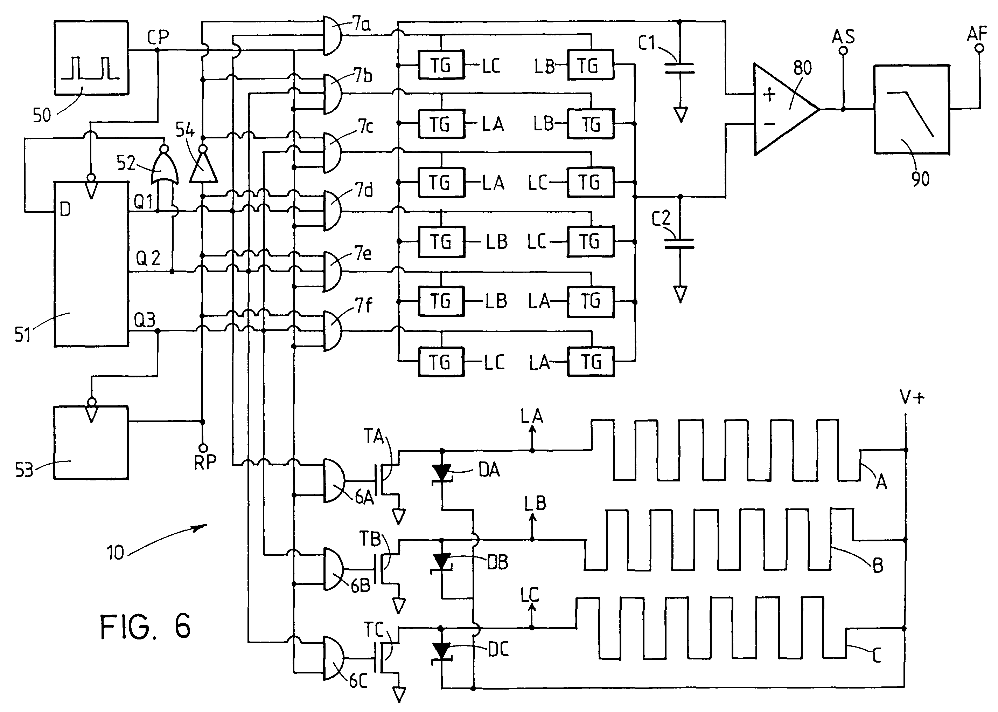

Des moyens électroniques de capteurs conformes à l'invention sont décrits ci-après à titre d'exemple pour un capteur comportant trois enroulements sur le premier élément, tels qu'illustrés aux figures 3 et 4. La figure 6 montre schématiquement ces moyens électroniques, ou circuit, avec les trois méandres A, B, C, entrelacés mais représentés de manière distincte pour plus de clarté. Ils sont connectés en étoile, avec leur bornes communes reliées ici à une tension positive V+, pouvant être la tension d'alimentation du circuit. Les autres bornes, désignées par LA, LB, LC, sont respectivement connectées aux transistors de commande TA, TB, TC, aux diodes limitrices de surtension DA, DB, DC, ainsi qu'aux bornes de même nom LA, LB, LC des portes de transmission ou transistors de commutation TG. Les transistors de commande sont à effet de champ à enrichissement de type MOS, à canal N.

Le principe de mesure est le suivant. On mesure le couplage via l'échelle en générant une impulsion de tension sur le méandre A et en échantillonnant simultanément la différence des tensions induites sur les deux autres méandres B et C, les méandres inducteurs et induits étant ainsi en quadrature, comme on le verra plus loin.

Ce couplage varie de manière spatialement périodique, de période spatiale T comme cela a été expliqué en référence à la figure 2, et on peut donc obtenir une séquence périodique de tensions échantillonnées simplement en générant la prochaine impulsion sur le méandre suivant B et en échantillonnant la différence de tension des méandres suivants C,A, etc.. Cette séquence donne trois échantillons par période, ce qui est suffisant pour déterminer la phase du signal échantillonné.

Celle-ci varie linéairement avec le déplacement pour autant que les harmoniques spatiaux de la caractéristique de couplage en fonction du déplacement soient négligeables. Ceci est normalement le cas, étant donné que les harmoniques spatiaux pairs sont faibles, que l'harmonique spatial 3 n'est pas échantillonné, et que ceux d'ordre 5 et supérieur sont fortement atténués pour un écart suffisant, de l'ordre de 0,2 T, entre la surface comportant les méandres et celle de l'échelle. En effet, les harmoniques spatiaux du champ d'un méandre diminuent exponentiellement avec l'écart, un harmonique d'ordre m diminuant de moitié pour un écart de 0,22 T/m. La phase du signal peut alors être calculée en fonction des valeurs numérisées de l'amplitude et de la polarité des trois tensions échantillonnées. La méthode est rapide, mais nécéssite un convertisseur analogique-numérique et une unité arithmétique.

Les moyens électroniques décrits ici en exemple et illustrés à la figure 6 déterminent la phase directement par filtrage d'un signal échantillonné six fois par période, le filtrage passe-bas étant plus simple pour un nombre d'échantillons par période plus élevé. L'harmonique spatial 3 est échantillonné dans ce cas, mais peut être filtré. Par contre l'harmonique spatial 5 est transposé sur la fondamentale par l'échantillonnage et doit donc être suffisament atténué avant, par exemple par la forme des méandres et de l'échelle ou simplement par un écart suffisant, comme indiqué plus haut.

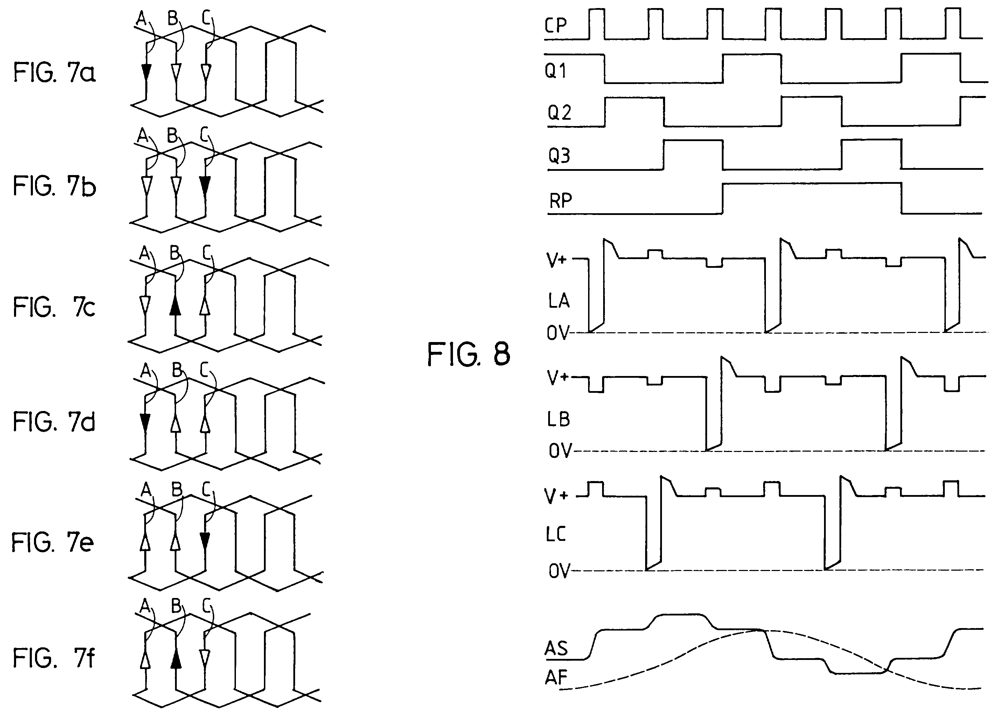

Les figures 7a à 7f montrent une possibilité de générer avec trois méandres connectés en étoile, tels que montrés à la figure 3, six configurations par période T, tout en respectant la quadrature entre méandres inducteurs et méandres induits. Les méandres entrelacés A,B,C, connectés en étoile y sont représentés avec leur borne commune à droite; pour des enroulements tels que montrés à la figure 4, composés chacun de deux méandres aller-retour superposés dont les courants ont le même sens, toutes les bornes seraient bien entendu du même côté. Des flèches noires marquent le méandre inducteur et le sens du courant inducteur, et des flèches blanches marquent les méandres induits et la polarité de mesure. Dans la figure 7a le méandre A est inducteur et les méandres B et C sont induits. Comme leurs segments voisins possèdent la même polarité de mesure, ils sont donc équivalents à un méandre fictif intermédiaire, en quadrature avec le méandre inducteur et leur couplage mutuel en l'absence d'échelle est donc nul. Ici, la configuration des méandres implique des polarités de mesure aux bornes toujours opposées: dans la figure 7a, la flèche blanche marquant la polarité du méandre B s'éloigne de la borne LB, tandis que celle du méandre C va vers la borne LC; on mesure donc la différence de tension. En décalant la configuration de la figure 7a de T/6, on remarque que cette fois le méandre inducteur serait entre deux méandres, lesquels deviendraient donc inducteurs, ce qui augmenterait la consommation de courant et la complexité du circuit; par contre le méandre induit fictif se placerait sur un méandre réel. Mais comme on mesure un couplage, on peut sans autre échanger méandres inducteurs et induits pour obtenir la configuration de la figure 7b, avec les méandres A,B induits et C inducteur. A chaque décalage de T/6, on échange ainsi les méandres inducteurs et induits, pour obtenir les configurations restantes, toutes avec un méandre inducteur et deux méandres induits. Enfin, le sens des flèches est inversé dans les figures 7c, 7d, pour n'avoir qu'un seul sens de courant inducteur dans les méandres afin de simplifier les circuits de commande. En inversant également les polarités de mesure, celle du signal couplé reste correcte.

Ces six configurations sont générées par le circuit 10 de la figure 6. A cet effet, un générateur 50 génère un train d'impulsions à sa sortie CP qui sert d'horloge à un registre à décalage à trois étages 51 et commande les portes logiques de type "et" 6A à 6C et 7a à 7f. L'entrée D du registre à décalage 51 est commandée par une porte logique de type "ou inversé" 52 reliée aux deux premières sorties Q1,Q2 du registre, résultant en un compteur de module 3, chacune de ses sorties Q1,Q2,Q3 étant successivement à l'état logique 1 pendant que les deux autres sont à 0. Le changement d'un état au suivant se fait au flanc descendant du signal sur CP. Le flanc descendant du signal sur la sortie Q3 bascule un diviseur 53 dont la sortie RP alterne entre les états logiques 0 et 1. Pour plus de clarté, les formes d'onde des signaux sur CP, Q1, Q2, Q3, RP sont représentées dans la figure 8. La sortie Q1 est montrée initialement à l'état logique 1 et les sorties RP et CP à l'état logique 0.

Lorsque CP passe à l'état logique 1, donc quand une impulsion commence, la porte 6A de la figure 6 est activée et enclenche le transistor TA, qui met la borne LA du méandre A à la masse (zéro volt). Le méandre A devient donc inducteur. Simultanément la porte 7a, dont une entrée reçoit via l'inverseur 54 le complément du signal sur RP, a ses trois entrées à l'état logique 1 et enclenche deux portes ou transistors de commutation TG, dont l'un relie la borne LC du méandre C au condensateur C1 et à l'entrée "+" de l'amplificateur 80 à entrée différentielle, et dont l'autre relie la borne LB du méandre B au condensateur C2 et à l'entrée "-" de l'amplificateur 80. On a donc la configuration de la figure 7a, et l'on peut aisément vérifier que les configurations des figures 7b à 7f sont bien générées par le circuit de la figure 6.

A la fin de l'impulsion sur la sortie CP, les transistors de commutation TG sont déclenchés, et les condensateurs C1 et C2 ont emmagasiné les tensions induites dans les méandres C et B; le transistor de commande TA est déclenché. La figure 8 montre aussi les formes d'onde aux bornes LA, LB, LC, ainsi que le signal différentiel échantillonné et amplifié AS à la sortie de l'amplificateur 80, et le signal filtré AF, à la sortie du filtre 90. En mesurant le déphasage entre le signal AF et la phase de référence RP, on obtient une quantité proportionnelle au déplacement, un tour de 360 degrés de déphasage correspondant à une période spatiale T de la règle. La mesure d'un déphasage sur un nombre quelconque de périodes est bien connue. A titre d'exemple, elle peut se ramener à une différence de temps entre les transitions de même polarité du signal AF et de la phase RP. Mais comme elle comporte une ambiguïté d'un nombre entier de pas T, puisqu'un déphasage correspondant à un nombre entier de périodes donne une différence de temps nulle entre ces transitions, on doit aussi comptabiliser le nombre de périodes durant le déplacement à mesurer, afin d'éviter des écarts de mesure d'un nombre entier de pas T. Le déplacement sur plusieurs périodes spatiales T équivaut donc à un déphasage sur le même nombre de tours ou périodes. Comme plus haut, on pourrait se passer du filtre 90, et calculer le déplacement à partir des tensions échantillonnées du signal AS. Pour ceci, la vitesse d'échantillonnage doit être suffisante par rapport à la vitesse maximale de déplacement pour suivre ce dernier sans risque de manquer un nombre entier de pas T.

Dans la réalisation d'un tel capteur, il faut veiller à ce que les inductances propres des méandres soient égales et leurs inductances mutuelles directes minimisées et/ou égalisées. Les lignes de connection aux bornes des méandres, en particulier, doivent rester courtes ou être faites pour contribuer aussi peu que possible à ces inductances. Une bonne solution consiste par exemple à tout intégrer sur un substrat semi-conducteur, à proximité immédiate des méandres, voire inclure ceux-ci sur le substrat. La non-linéarité résiduelle peut être compensée si nécéssaire électroniquement ou en ajustant les inductances propres et mutuelles, soit par la forme des enroulements comme par exemple dans la figure 4, soit par l'influence d'écrans perméables conducteurs à proximité des enroulements.

La faible inductance propre de tels méandres, typiquement d'un microhenry ou moins, entraîne des montées de courant très rapides, de quelques ampères par microseconde: pour une consommation de courant suffisamment basse, la durée des impulsions doit être inférieure à 100 ns. Une limite supérieure de la durée est aussi donnée par la constante de temps L/R, L étant l'inductance propre du méandre et R sa résistance plus celle du transistor de commande. Elle varie de quelques ns (méandre sur circuit intégré) à quelques 100 ns (circuit imprimé). Les paramètres de commutation des transistors CMOS modernes sont compatibles avec de telles durées d'impulsions. De plus ces paramètres varient assez lentement pour garantir une uniformité suffisante entre impulsions rapprochées, donc une bonne précision de mesure. Comme les variations de courant sont élevés pendant ces impulsions, le rapport signal/bruit est élevé et la mesure est peu susceptible d'être électromagnétiquement perturbée, d'autant plus que le niveau des tensions induites est de l'ordre de 100 mV avec une tension d'alimentation de 3 V. Pour que la consommation moyenne reste faible, il faut un écart de temps suffisant entre impulsions. Un écart de 50 microsecondes, correspondant pour un pas T de l'échelle de 0,75 mm à un décalage spatial de 0,125 mm (T/6), permettrait de suivre des déplacements de vitesse inférieurs à 2,5 mètres par seconde. Avec une durée d'impulsion de 50 ns, une tension de 3V et une inductance propre de 1 microhenry, on obtient une consommation moyenne de courant de 75 microampères environ, adéquate pour un instrument de mesure tel qu'un pied à coulisse. Le faible pas de l'échelle allié à la facilité d'interpolation permet une précision de mesure de l'ordre du micromètre.

Il est bien entendu que les modes de réalisation décrits ci-dessus ne présent aucun caractère limitatif et qu'ils peuvent recevoir toutes modifications désirables à l'intérieur du cadre tel que défini par la revendication 1.

Il peut y avoir un nombre d'enroulements, entrelacés ou non, arbitraire allant à un nombre très élevé. La forme des enroulements peut être très différente, par exemple chacun constitué par une ou plusieurs spirales sur une ou plusieurs couches conductrices. Des éléments magnétiquement perméables peuvent être utilisés pour améliorer les performances de ces enroulements.

Le second élément ou échelle peut être différent : par exemple, pour des échelles courtes, un méandre fermé, donc ayant ses extrémités court-circuitées, peut être avantageux comme il permet l'emploi d'enroulements distincts, c'est-à-dire entrelacés, sur le premier élément ou curseur, puisqu'ils sont tous couplés à ce méandre fermé. Un tel arrangement serait particulièrement utile dans un petit capteur rotatif, avec un méandre fermé sur tout le pourtour.

Le capteur peut être linéaire, curvilinéaire, hélicoïdal ou présenter tout autre chemin X le long duquel les deux éléments sont déplacés l'un par rapport à l'autre.

Le circuit électronique 10 pourrait être constitué de manière très différente, en effectuant la répartition des méandres inducteurs et induits, ainsi que l'évaluation du signal induit par rapport au déplacement au moyen d'autres composants électroniques.

Finalement, la combinaison de deux capteurs conformes à l'invention ou davantage, alignés selon le même chemin, mais avec des pas d'échelle différents, permet la détermination sans ambiguïté de la position sur une étendue bien plus grande qu'un pas d'échelle, donc une lecture absolue de la position dans ladite étendue.

## Revendications

1. Capteur inductif de déplacement comportant deux éléments (1,2; 31,32) mobiles l'un par rapport à l'autre le long d'un chemin (x) pourvus d'enroulements (1A à 1D; 31A à 31C) disposés le long de ce chemin et dont les inductances varient périodiquement en fonction du déplacement relatif des deux éléments, et des moyens électroniques (10) pour déterminer la valeur dudit déplacement par la mesure des inductances des enroulements, les enroulements (1A à 1D; 31A à 31C) étant agencés sur un premier (1;31) des deux éléments, le second élément (2;32) présentant des caractéristiques électromagnétiques spatialement périodiques (21,22; 321,322) de période spatiale T le long de ce chemin susceptibles de modifier les inductances des en-roulements, lesdits moyens électroniques (10) étant reliés aux enroulements agencés sur le premier élément pour produire un courant électrique dans une partie au moins desdits enroulements et pour mesurer les effets produits par la position des caractéristiques électromagnétiques spatialement périodiques du second élément, caractérisé par le fait que lesdits moyens électroniques (10) sont agencés de façon à produire un courant électrique dans une première partie des enroulements au moins temporairement inducteurs et à mesurer les signaux induits dans une seconde partie des enroulements au moins temporairement induits.

2. Capteur selon la revendication 1, caractérisé par le fait que le premier élément (1;31) comprend des enroulements ou groupes d'enroulements de configuration spatialement périodique, de période spatiale 2T le long du chemin (x).

3. Capteur selon la revendication 1, caractérisé par le fait que la seconde partie des enroulements est disposée en quadrature par rapport à la première partie des en-roulements.

4. Capteur selon l'une des revendications précédentes, caractérisé par le fait que le premier élément (31;41) comprend N enroulements (31A à 31C; 41A à 41E) entrelacés sur la même surface et décalés les uns par rapport aux autres d'une distance correspondant à un nombre entier de la quantité T/N le long dudit chemin (x).

5. Capteur selon l'une des revendications précédentes, caractérisé par le fait que les enroulements (41A, 41B, 41C) sont constitués chacun par deux méandres aller-retour partiellement superposés dont les connexions aux moyens électroniques (10) sont agencés sur un même côté du premier élément, les deux méandres partiels étant reliés l'un à l'autre sur le côté opposé du premier élément.

6. Capteur selon l'une des revendications précédentes, caractérisé par le fait que le ou les enroulements (41A, 41B, 41C) sont progressivement rétrécis des deux côtés du premier élément.

7. Capteur selon l'une des revendications précédentes, caractérisé par le fait que le second élément (2;32) comprend une configuration spatialement périodique au moins partiellement conductrice de période spatiale T le long dudit chemin (x).

8. Capteur selon la revendication 7, caractérisé par le fait que le couplage inductif entre enroulements du premier élément est réalisé par l'intermédiaire de courants induits ou de courant de Foucault dans le second élément.

9. Capteur selon la revendication 8, caractérisé par le fait que le second élément comprend une série de spires fermées (5B) ou de plages conductrices (5C) sur un substrat isolant, ou encore une pièce conductrice en forme d'échelle (2;32), ou de bande perforée ou un relief périodique (5D,5E).

10. Capteur selon l'une des revendications précédentes, caractérisé par le fait que lesdits moyens électroniques (10) sont agencés de façon à mesurer des couplages inductifs entre au moins deux enroulements (A,B,C) ou groupes d'enroulements d'inductance L et de résistance R en appliquant une impulsion de tension plus courte que la constante de temps L/R aux bornes d'au moins un des enroulements ou groupe d'enroulements et en mesurant l'impulsion de tension induite aux bornes d'au moins un autre des en-roulements ou groupes d'enroulements.

11. Capteur selon l'une des revendications précédentes, caractérisé en ce que le premier élément (31) comporte trois enroulements (31A à 31C) en méandres connectés en étoile décalés les uns des autres d'une distance correspondant à un nombre entier de la quantité T/3 le long dudit chemin (x), les moyens électroniques (10) étant agencés pour appliquer une impulsion de tension aux bornes de l'un des enroulements et pour combiner les impulsions induites dans les deux autres enroulements de manière à obtenir un signal échantillonné équivalent à celui d'un enroulement fictif intermédiaire décalé d'une distance de T/2 par rapport à l'enroulement inducteur correspondant à une position en quadrature.

12. Capteur selon la revendication 11, caractérisé en ce que les moyens électroniques (10) sont agencés de façon à décaler de manière périodique les enroulements induc-teurs et induits dans le temps pour obtenir 6 échantillons par période spatiale T formant un signal périodique dont la composante fondamentale obtenue au moyen d'un filtre (90) possède une phase qui varie proportionnellement au déplacement à raison d'un tour complet par période spatiale T.

13. Capteur selon la revendication 12, caractérisé en ce que les moyens électroniques (10) comprennent un générateur d'impulsion (50) relié à un registre de décalage (51) dont les sorties sont susceptibles de contrôler, d'une part, des organes de commandes (TA,TB,TC) pour rendre successivement un des enroulements inducteur, et, d'autre part, des commutateurs (TG) pour relier successivement les deux autres enroulements à des organes de mesure (C1, C2, 80, 90) destinés à mesurer les impulsions de tension induites dans ces deux autres enroulements.

## Patentansprüche

1. Induktiver Weggeber mit zwei Elementen (1, 2; 31, 32), die relativ zueinander entlang eines Weges (x) beweglich und mit Windungen (1A bis 1D; 31A bis 31C) versehen sind, die entlang dieses Weges angeordnet sind und deren Induktivitäten sich in Abhängigkeit von der gegenseitigen Verschiebung der beiden Elemente periodisch verändern, sowie mit elektronischen Mitteln (10), um durch Messung der Induktivitäten der Windungen die Länge der benannten Verschiebung zu bestimmen, wobei die Windungen (1A bis 1D; 31A bis 31C) auf einem ersten (1; 31) der beiden Elemente angeordnet sind, während das zweite Element (2; 32) räumlich-periodische elektromagnetische Merkmale (21, 22; 321, 322) der Raumperiode T entlang dieses Weges aufweist, die in der Lage sind, die Induktivitäten der Windungen abzuwandeln, und wobei die benannten elektronischen Mittel (10) an die auf dem ersten Element angeordneten Windungen angeschlossen sind, um in zumindest einem Teil der benannten Windungen einen elektrischen Strom zu erzeugen und die durch die Lage der räumlich-periodischen elektromagnetischen Merkmale des zweiten Elements erzeugten Effekte zu messen, dadurch gekennzeichnet, dass die benannten elektronischen Mittel (10) so angeordnet sind, dass sie in einem ersten Teil der Windungen, die zumindest zeitweise induzierend sind, einen elektrischen Strom erzeugen und in einem zweiten Teil der Windungen, die zumindest zeitweise induziert sind, die induzierten Signale messen.

2. Weggeber nach Anspruch 1, dadurch gekennzeichnet, dass das erste Element (1; 31) Windungen oder Windungsgruppen einer räumlich-periodischen Konfiguration mit der Raumperiode 2T entlang des Weges (x) aufweist.

3. Weggeber nach Anspruch 1, dadurch gekennzeichnet, dass der zweite Teil der Windungen um 90° phasenverschoben zum ersten Teil der Windungen angeordnet ist.

4. Weggeber nach einem der vorangehenden Ansprüche, dadurch gekennzeichnet, dass das erste Element (31; 41) N Windungen (31A bis 31C; 41A bis 41E) aufweist, die auf der gleichen Fläche verflechtet sind und gegeneinander entlang des benannten Weges (x) um einen Abstand, der einer ganzen Anzahl der Grösse T/N entspricht, versetzt sind.

5. Weggeber nach einem der vorangehenden Ansprüche, dadurch gekennzeichnet, dass die Windungen (41A, 41B, 41C) aus je zwei teilweise überlagerten Hin- und Rückschleifen bestehen, deren Anschlüsse an die elektronischen Mittel (10) auf ein und derselben Seite des ersten Elements angeordnet sind, wobei die beiden Teilschleifen miteinander auf der anderen Seite des ersten Elements verbunden sind.

6. Weggeber nach einem der vorangehenden Ansprüche, dadurch gekennzeichnet, dass die Windung oder Windungen (41A, 41B, 41C) gegen beide Seiten hin des ersten Elements fortschreitend verkürzt sind.

7. Weggeber nach einem der vorangehenden Ansprüche, dadurch gekennzeichnet, dass das zweite Element (2; 32) eine zumindest teilweise leitende, räumlich-periodische Konfiguration der Raumperiode T entlang des benannten Weges (x) umfasst.

8. Weggeber nach Anspruch 7, dadurch gekennzeichnet, dass die induktive Kopplung zwischen Windungen des ersten Elements vermittels induzierter Ströme oder durch Wirbelströme im zweiten Element zustande kommt.

9. Weggeber nach Anspruch 8, dadurch gekennzeichnet, dass das zweite Element eine Reihe von geschlossenen Schleifen (5B) oder leitfähigen Bereichen (5C) auf einem isolierenden Substrat oder aber ein leitendes Teil in Gestalt einer Leiter (2; 32) oder eines Lochbandes oder ein periodisches Relief (5D, 5E) umfasst.

10. Weggeber nach einem der vorangehenden Ansprüche, dadurch gekennzeichnet, dass die benannten elektronischen Mittel (10) so eingerichtet sind, dass sie die induktiven Kopplungen zwischen zumindest zwei Windungen (A, B, C) oder Gruppen von Windungen des induktiven Widerstandes L und des Widerstandes R messen, wobei ein Spannungspuls von kürzerer Zeitdauer als die Zeitkonstante L/R an die Anschlüsse von zumindest einer der Windungen oder Windungsgruppen angelegt wird, und wobei der induzierte Spannungspuls an den Anschlüssen von zumindest einer anderen Windung oder Windungsgruppe gemessen wird.

11. Weggeber nach einem der vorangehenden Ansprüche, dadurch gekennzeichnet, dass das erste Element (31) drei Windungen (31A bis 31C) in Schleifenform umfasst, die sternförmig miteinander verbunden und entlang des Weges (x) voneinander um einen Abstand versetzt sind, der einem ganzen Vielfachen der Grösse T/3 entspricht, wobei die elektronischen Mittel (10) so angeordnet sind, dass ein Spannungspuls an die Anschlüsse einer der Windungen angelegt wird und die in den anderen beiden Windungen induzierten Pulse so miteinander kombiniert werden, dass ein Abtastsignal erhalten wird, das dem einer fiktiven Zwischenwindung entspricht, die entsprechend einer um 90° phasenverschobenen Stellung um einen Abstand von T/2 gegen die induzierende Windung verschoben ist.

12. Weggeber nach Anspruch 11, dadurch gekennzeichnet, dass die elektronischen Mittel (10) so eingerichtet sind, dass sie die induzierenden und induzierten Windungen zeitlich-periodisch gegeneinander versetzen, um pro Raumperiode T sechs Abtastsignale zu erhalten, die ein periodisches Signal bilden, dessen vermittels eines Filters (90) erhaltene Grundkomponente eine Phase besitzt, die sich proportional zum Weg um eine volle Drehung pro Raumperiode T verändert.

13. Weggeber nach Anspruch 12, dadurch gekennzeichnet, dass die elektronischen Mittel (10) einen Pulsgenerator (50) umfassen, der an ein Schieberegister (51) angeschlossen ist, dessen Ausgänge in der Lage sind, einerseits die Steuerorgane (TA, TB, TC) so zu steuern, dass aufeinanderfolgend jeweils eine der Windungen induzierend gemacht wird, und andererseits die Schalter (TG) so zu steuern, dass aufeinanderfolgend die anderen beiden Windungen an Messorgane (C1, C2, 80, 90) angeschlossen werden, die dazu bestimmt sind, die in diesen anderen beiden Windungen induzierten Spannungspulse zu messen.

## Claims

1. An inductive displacement sensor including two elements (1,2 ;31,32) movable one with respect to the other along a path (x) and provided with windings (1 A to 1 D ; 31 A to 31 D) arranged along this path and whose inductances vary periodically as a function of the relative displacement of the two elements and electronic means (10) for determining the value of said displacement from the measurement of the inductances of the windings, the windings (1A to 1D ; 31A to 31C) being arranged on one first (1 ;31) of the two elements, the second element (2;32) exhibiting electromagnetic characteristics (21,22 ;321,322) which are spatially periodical with a spatial period T along the path and capable of modifying the inductances of the windings, said electronic means (10) being connected to the windings arranged on the first element for producing an electrical current in at least one part of said windings and for measuring the effects produced by the position of the spatially periodical electromagnetic characteristics of the second element, characterized in that said electronic means (10) are arranged in such a manner as to produce an electrical current in a first part of the windings which are at least temporarily inductive and to measure the signals induced in a second part of the windings which are at least temporarily induced.

2. A sensor according to claim 1, characterized in that the first element (1 ;31) includes windings or groups of windings of a spatially periodical configuration, with a spatial period 2T along the path (x).

3. A sensor according to claim 1, characterized in that the second part of the windings is arranged in quadrature relative to the first part of the coils.

4. A sensor according to one of the preceding claims, characterized in that the first element (31;41) includes N windings (31 A to 31 C;41 A to 41 E) interlaced on the same surface and offset relative to one another by a distance corresponding to an integral of the amount T/N along said path (x).

5. A sensor according to one of the preceding claims, characterized in that the windings (41 A, 41 B, 41 C) are comprised each one of two partially superimposed to-and-fro meanders whose connections to the electronic means (10) are arranged on the same side of the first element, the two partial meanders being connected together on the opposite side of the first element.

6. A sensor according to one of the preceding claims, characterized in that the winding or the windings (41 A, 41 B, 41 C) are progressively narrowed on both sides of the first element.

7. A sensor according to one of the preceding claims, characterized in that the second element (2;32) includes a spatially periodical configuration at least partly conductive of a spatial period T along said path (x).

8. A sensor according to claim 7, characterized in that the inductive coupling between the windings of the first element is ensured by means of induced currents or eddy currents in the second element.

9. A sensor according to claim 8, characterized in that the second element includes a series of closed loops (5B), conductive areas (5C) on an insulating substrate, or a conductive piece shaped as a ladder (2;32), or as a perforated band or as a periodical relief (5D, 5E).

10. A sensor according to one of the preceding claims, characterized in that said electronic means (10) are arranged in such a manner as to measure the inductive couplings between at least two windings (A, B, C) or groups of windings having an inductance L and a resistance R, by applying a voltage pulse shorter than the time constant UR at the terminals of at least one of the windings or group of windings and by measuring the induced voltage pulse at the therminals of at least one of the other windings or groups of windings.

11. A sensor according to one of the preceding claims, characterized in that the first element (31) includes three star-connected windings (31A to 31 C) shaped as meanders and offset from each other by a distance corresponding to an integer times the amount T/3 along said path (x), the electronic means (10) being arranged for applying a voltage pulse to the terminals of one of the windings and for combining the pulses induced in the two other windings so as to obtain a sampled signal equivalent to that of an imaginary intermediate winding offset by the distance T/2 with respect to the inductor coil corresponding to a position in quadrature.

12. A sensor according to claim 11, characterized in that the electronic means (10) are arranged in such a manner as to shift periodically the inductor windings and the induced windings in the course of time, so as to obtain 6 samples per spatial period T forming a periodical signal whose fundamental component obtained by means of a filter (90) possesses a phase which varies in proportion to the displacement, namely by a full circle per spatial period T.

13. A sensor according to claim 12, characterized in that the electronic means (10) include a pulse generator (50) connected to a shift register (51), whose outputs are capable of controlling, on the one hand, control members (TA, TB, TC) to make successively one of the windings inductive and on the other hand, switches (TG) for connecting successively the two other windings to measuring members (C1, C2, 80, 90) designed for measuring the voltage pulses induced in these two other windings.
